# EUROPÄISCHE PATENTSCHRIFT

(11) **EP 1 429 054 B1**
(45) Veröffentlichungstag und Bekanntmachung des Hinweises auf die Patenterteilung: **11.04.2012**
(21) Anmeldenummer: 04006318.2
(22) Anmeldetag: 19.12.2001
(51) Int. Cl.: F16H 57/08

(54) **Planetengetriebestufe**
Planetary gear stage
Etage de transmission planétaire

(30) Priorität: 22.12.2000 DE 10064815
(43) Veröffentlichungstag der Anmeldung: 16.06.2004
(62) Teilanmeldung aus: 01984873.8
(73) Patentinhaber: ZF Friedrichshafen AG, 88038 Friedrichshafen (DE)
(72) Erfinder: Schulz, Horst, 88045 Friedrichshafen (DE); Kirschner, Tino, 88097 Eriskirch (DE)

(56) Entgegenhaltungen:
- US-A- 1 619 051
- US-A- 4 091 688

## Beschreibung

Die Erfindung betrifft eine Planetengetriebestufe nach dem Oberbegriff des Hauptanspruches. Die US 4 091 688 wird als nächst liegender Stand der Technik angesehen.

Derartige Planetengetriebe, bei denen der Planetenträger den Abtrieb bildet und gemeinsam mit einer abtriebsseitigen Abtriebswelle durch ein axial angestelltes Schräglagerpaar gelagert ist, sind dafür geeignet, an der Abtriebswelle hohe Kräfte und Kippmomente zu übertragen. Derartige Getriebe werden in Kombination mit einem angebauten Elektromotor unter anderem in der Automatisierungstechnik verwendet, wobei auf der Abtriebswelle beispielsweise ein Zahnritzel oder eine Riemenscheibe für Zahnriemen angeordnet ist. Mit der Lagerung der Abtriebswelle und des Planetenträgers durch ein axial angestelltes Schräglagerpaar ist durch eine entsprechende Vorspannung zwischen den Lagern eine sehr hohe Steifigkeit und Präzision der Lagerung erzielbar.

Bei der Lagerung durch ein axial angestelltes Schräglagerpaar wird grundsätzlich zwischen der sogenannten X-Anordnung und der sogenannten O-Anordnung der beiden angestellten Lager unterschieden. Bei der X-Anord-nung bilden die Drucklinien, die durch die Wälzkörper verlaufen und sich in der Rotationsachse schneiden, Druckkegel, deren Spitzen einander zugewandt sind. Bei der O-Anordnung sind die Spitzen der Druckkegel der beiden Lager des Lagerpaars voneinander abgewandt.

Die X-Anordnung bietet fast immer beste Voraussetzungen für eine einfache Montage, geringen Bauaufwand und übersichtliche Konstruktionen, da beide Lager des Schräglagerpaars jeweils mit ihrem Innenring und ihrem Außenring so montiert werden können, dass axiale Anschlagflächen an den Bauteilen, die beim Lagereinpressen als Anschläge dienen, später im Betrieb auch die axialen Betriebsbelastungen aufnehmen können und so in der Regel keine weiteren Axialsicherungsbauteile für die Lagerinnen- und -außenringe vorgesehen und montiert werden müssen. Allerdings ist bei der X-Anordnung die lagerkinematisch wirksame Lagerdistanz, also der Abstand der Spitzen der Druckkegel, kürzer als die Axialdistanz der beiden Lager. Grundsätzlich ist jedoch eine möglichst große lagerkinematisch wirksame Lagerdistanz erwünscht, um eine hohe Belastbarkeit und Steifigkeit sowie einen präzisen Lauf der Abtriebswelle zu erzielen. Ein Getriebe, bei dem der Planetenträger bzw. die Abtriebswelle durch ein Lagerpaar in X-Anordnung gelagert ist, ist beispielsweise in der nicht vorveröffentlichten DE 199 56 789 A1 gezeigt. Aufgrund der oben angesprochenen Eigenschaften der X-Anordnung sind bei diesem Getriebe die beiden angestellten Lager beiderseits der Planetenräderebene bzw. beiderseits des Planetenradsatzes angeordnet, wodurch eine insgesamt kurze axiale Baulänge des Getriebes möglich ist.

Demgegenüber bietet die O-Anordnung eine günstigere lagerkinematisch wirksame Lagerdistanz, die größer ist als die konstruktive Axialdistanz der beiden Lager, wodurch Vorteile für die Belastbarkeit und Steifigkeit sowie hinsichtlich eines präzisen Laufs der Antriebswelle erzielbar sind. Die Lager beiderseits der Planetenräderebene in O-Anordnung einzubauen, ist jedoch sehr problematisch, da hier beim Einpressen der Lager der Richtungssinn der Einpreßbewegung stets entgegengesetzt liegt zum axialen Richtungssinn der späteren Lagerbetriebsbelastung. Es sind also spielfreie Axialsicherungsbauteile für die Lagerinnen- und -außenringe notwendig, die schwierig unterzubringen sind und den Bauraumanspruch vergrößern. Eine exakte Einstellung des Lagerspiels bzw. der Lagervorspannung bei der Montage ist sehr aufwendig und problembehaftet.

Die EP 0 687 836 A1 zeigt ein Planetengetriebe, bei dem die Abtriebswelle durch ein Lagerpaar in O-Anordnung gelagert ist. Bei diesem Getriebe sind beide Lager des Lagerpaars nebeneinander und axial abtriebsseitig vom eigentlichen Planetengetriebe angeordnet. Die Innenringe der beiden Lager sitzen benachbart auf einem Wellenabschnitt der Abtriebswelle und sind durch eine Gewindemutter vorgespannt, während axiale Anschlagflächen an abgesetzten Gehäusebohrungen die Schultern der Außenringe abstützen. Nachteilig ist hier der insgesamt höhere axiale Bauraumanspruch des Getriebes, da im Raum abtriebsseitig neben dem Planetensatz beide Lager des Lagerpaars untergebracht werden müssen, während im Bereich der Eingangswelle vorhandener Bauraum ungenutzt bleibt. Aufgrund des geringen axialen Abstands der beiden Lager ist die lagerkinematisch wirksame Lagerdistanz trotz O-Anordnung gering.

Bei dem Planetengetriebe ist der Planetenträger bzw. die Abtriebswelle in der gleichen vorteilhaften Weise montierbar, wie bei einem Getriebe mit X-Anordnung, wobei allerdings die lagerkinematisch wirksame Axialdistanz wesentlich größer ist.

In einer vorteilhaften Ausgestaltung der Erfindung ist das erste Schräglager auf einer Seite einer durch die Planetenräder verlaufenden, axialen Planetenräderebene und das zweite Schräglager auf der anderen Seite der Planetenräderebene angeordnet. Diese Ausgestaltung bietet eine sehr große lagerkinematisch wirksame Axialdistanz bei einer kurzen Baulänge.

Sollen von der Abtriebswelle sehr hohe Kippmomente aufgenommen werden können, können beide Lager so angeordnet werden, dass die Innenringe in dem Gehäuse festgelegt sind und die Außenringe mit dem Planetenträger umlaufen, wobei die Spitzen beider Druckkegel voneinander abgewandt sind. Damit werden die gleichen lagerkinematischen Eigenschaften wie bei einer O-Anordnung erzielt.

Oftmals ist es jedoch auch schon ausreichend, wenn nur das erste Schräglager mit seinem Innenring in dem Gehäuse festgelegt ist und das zweite Schräglager mit seinem Innenring in dem Planetenträger umläuft und mit seinem Außenring in dem Gehäuse festgelegt ist, wobei das zweite Schräglager mit seinen Drucklinien einen Druckkegel bildet, dessen Spitze dem ersten Schräglager zugewandt ist. Hierdurch ergibt sich eine Parallelanordnung der Druckkegel, so dass - bei Verwendung von gleichen Lagern - die lagerkinematisch wirksame Axialdistanz gleich der tatsächlichen Axialdistanz der Lager ist.

Bei einer Ausführungsform dieser Ausgestaltung sind die Spitzen der Druckkegel der beiden Schräglager von der Abtriebsseite des Getriebes abgewandt, wodurch eine einfacher Aufbau erzielt wird. Bei der alternativen Ausführungsform sind die Spitzen der Druckkegel der beiden Schräglager zu der Abtriebsseite des Getriebes hingewandt, so dass die Lagerbasis in vorteilhafter Weise zur Abtriebswelle hin verschoben ist.

Da der Planetenträger innerhalb des Gehäuses umläuft, ist es notwendig, Mittel vorzusehen, die es ermöglichen, dass der Außenring dem Planetenträger zugeordnet werden kann und der Innenring dem Gehäuse. In vorteilhafter Weise kann dies dadurch geschehen, dass der Planetenträger zur Aufnahme des Außenrings des Schräglagers eine rohrförmige Verlängerung aufweist und/oder dass das Gehäuse zur Aufnahme des Innenrings dieses Schräglagers einen zylindrischen Vorsprung aufweist, der von einer ringförmigen Ausnehmung im Gehäuse umgeben ist, die dieses Schräglager und wenigstens teilweise die rohrförmige Verlängerung des Planetenträgers aufnimmt.

Anhand der beigefügten Zeichnungen werden die Erfindung und weitere vorteilhafte Details näher erläutert.
Dabei zeigen:
- Fig. 1: eine erste Ausführungsform eines erfindungsgemäßen Getriebes und
- Fig. 2: eine zweite Ausführungsform eines erfindungsgemäßen Getriebes.

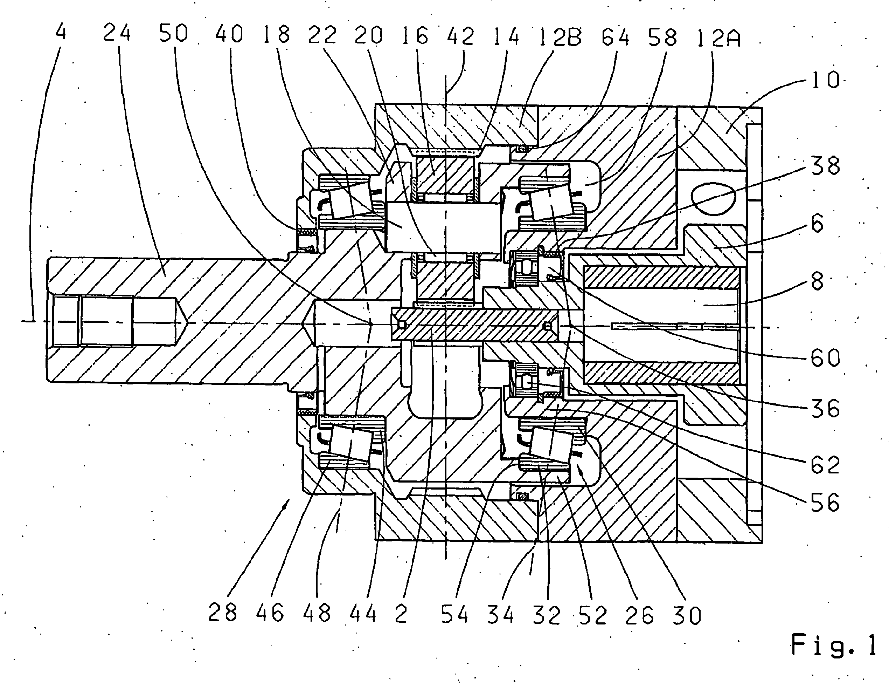

In der Fig. 1 ist mit 2 ein zu einer Getriebehauptachse 4 koaxiales Sonnenrad bezeichnet. Das Sonnenrad 2 ist drehfest mit einer Sonnenradwelle 6 verbunden, die einen Aufnahmebereich 8 für eine nicht dargestellte Motorwelle eines an den Motorflansch 10 anflanschbaren, nicht dargestellten Elektromotors aufweist. Das Gehäuse des Planetengetriebes ist aus zwei Gehäuseteilen 12A, 12B zusammengesetzt. Im Gehäuseteil 12B ist ein Hohlrad 14 eingearbeitet. Mehrere Planetenräder 16, von denen nur eines dargestellt ist, sind auf Planetenbolzen 18 mit Planetenlagern 20 drehbar gelagert. Die Planetenbolzen 18 bzw. die Planetenräder 16 sind am Umfang eines Planetenträgers 22 verteilt angeordnet und in gleichzeitigem Zahneingriff mit dem Sonnenrad 2 und dem Hohlrad 14. Der Planetenträger 22 bildet den Abtrieb und ist einstückig mit der Abtriebswelle 24 ausgebildet. Planetenträger und Abtriebswelle könnten jedoch auch durch eine drehfeste und biegesteife Verbindung verbunden sein. Der Planetenträger 22 bzw. die Abtriebswelle 24 sind durch ein axial angestelltes Schräglagerpaar, gebildet aus einem ersten Schräglager 26 und einem zweiten Schräglager 28, innerhalb des Gehäuses gelagert. In der dargestellten Ausführungsform sind Kegelrollenlager verwendet, die besonders tragfähig sind. Die angestellte Lagerung könnte jedoch auch mit Schrägkugellagern oder sogar gegeneinander angestellten Rillenkugellagern ausgeführt werden. Ebenso ist es möglich, eine Kombination von Kegelrollen-, Schrägkugel- oder Rillenkugellagern zu verwenden. Wesentlich ist, dass die beiden Lager des Lagerpaars gegeneinander axial angestellt werden können.

Zur Abdichtung des Getriebeinnenraums sind auf der Antriebswelle 6 und auf der Abtriebswelle 24 Radialwellendichtringe 38, 40 vorgesehen.

Das erste Schräglager 26 ist mit seinem Innenring 30 in dem Gehäuse 12A festgelegt und läuft mit seinem Außenring 32 mit dem Planetenträger 22 um. Um eine möglichst große lagerkinematisch wirksame Distanz zu erzielen, ist das Schräglager 26 derart eingebaut, dass es mit seinen Drucklinien 34 einen Druckkegel bildet, dessen Spitze 36 von dem zweiten Schräglager 28 abgewandt ist.

Eine große Axialdistanz der Lager wird auch dadurch erzielt, dass das erste Schräglager 26 auf der in der Fig. 1 rechten Seite der durch die Planetenräder 16 verlaufenden axialen Planetenräderebene 42 und das zweite Schräglager 28 auf der anderen Seite der Planetenräderebene 42 angeordnet ist. In der Fig. 1 ist das zweite Schräglager 28 in derselben Weise eingebaut, wie bei einem Getriebe mit X-Anordnung. Dabei läuft der Innenring 44 des zweiten Schräglagers mit dem Planetenträger 22 und der Abtriebswelle 24 um, während der Außenring 46 im Gehäuse 12B festgelegt ist. Die Drucklinien 48 dieses Lagers bilden einen Druckkegel, dessen Spitze dem ersten Schräglager 26 zugewandt ist.

Die dargestellte Lageranordnung entspricht also weder einer X- noch einer O-Anordnung, sondern einer Kombination aus X- und O-Anordnung. Obgleich die durch die Drucklinien 34, 48 gebildeten Druckkegel gleich ausgerichtet sind, sind die beiden Lager 28, 26 gegeneinander angestellt und vorspannbar.

Die Spitzen 36, 50 der beiden Druckkegel sind von der durch die Abtriebswelle 24 repräsentierten Abtriebsseite des Getriebes abgewandt. Der Planetenträger 22 weist zur Aufnahme des Außenrings 32 des ersten Schräglagers 26 eine rohrförmige Verlängerung 52 auf, die mit einem Absatz 54 versehen ist. Das Gehäuseteil 12A weist zur Aufnahme des Innenrings 30 des ersten Schräglagers 26 einen zylindrischen Vorsprung 56 auf. Dieser ist von einer ringförmigen Ausnehmung 58 im Gehäuseteil 12A umgeben, die das erste Schräglager 26 und wenigstens teilweise die rohrförmige Verlängerung 52 des Planetenträgers 22 aufnimmt.

Der zylindrische Vorsprung 56 im Gehäuseteil 12A weist eine zur Getriebehauptachse 4 koaxiale Bohrung 60 auf, die ein Kugellager 62 für die hindurchgeführte Antriebswelle 6 aufnimmt.

Zur leichteren Montage ist das Gehäuse aus zwei Gehäuseteilen 12A, 12B zusammengesetzt, wobei das erste Schräglager 26 in dem ersten Gehäuseteil 12A und das zweite Schräglager 28 in dem zweiten Gehäuseteil 12B sitzt. Zur Abdichtung zwischen den Gehäuseteilen 12A, 12B ist eine Dichtung 64 vorgesehen.

Die Montageabfolge ist dieselbe wie bei einem Getriebe mit X-Anordnung. Zunächst wird der Innenring 30 des ersten Schräglagers 26 auf den axialen Vorsprung 56 bis zum Anschlag aufgeschoben. Als nächstes wird der Planetenträger, in den bereits der Außenring 32 ebenfalls bis zum Anschlag 54 eingepreßt ist, in Position gebracht. Der Planetenträger ist bereits mit dem Innenring 44 des zweiten Schräglagers versehen, der ebenfalls bis zum Anschlag auf den Lagersitz aufgepreßt ist. In einem letzten Montageschritt wird das Gehäuseteil 12B mit dem darin eingebrachten Außenring 46 des zweiten Schräglagers in Position gebracht und durch nicht dargestellte Schrauben mit dem Gehäuseteil 12A verschraubt. Die Vorspannung der angestellten Schräglager 26, 28 kann hierbei auf einfache Weise durch entsprechende Distanzelemente, die an axialen Stirnflächen der Lagerinnen- bzw. -außenringe oder zwischen den beiden Gehäuseteilen 12A, 12B eingebaut werden, eingestellt werden.

In der dargestellten Ausführungsform sind die beiden Kegelrollenlager 26, 28 Gleichteile. Es können jedoch ohne weiteres auch voneinander abweichende Baugrößen oder Bauformen von Schräglagern entsprechend verwendet werden.

In Kombination mit einem Elektromotor, der das Sonnenrad 2 direkt oder über eine vorgeschaltete Getriebestufe antreibt und der an das Getriebegehäuse angeflanscht ist, ergibt sich eine kurzbauende Antriebseinheit für hohe Belastungen der Abtriebswelle 24, die einfach montierbar ist.

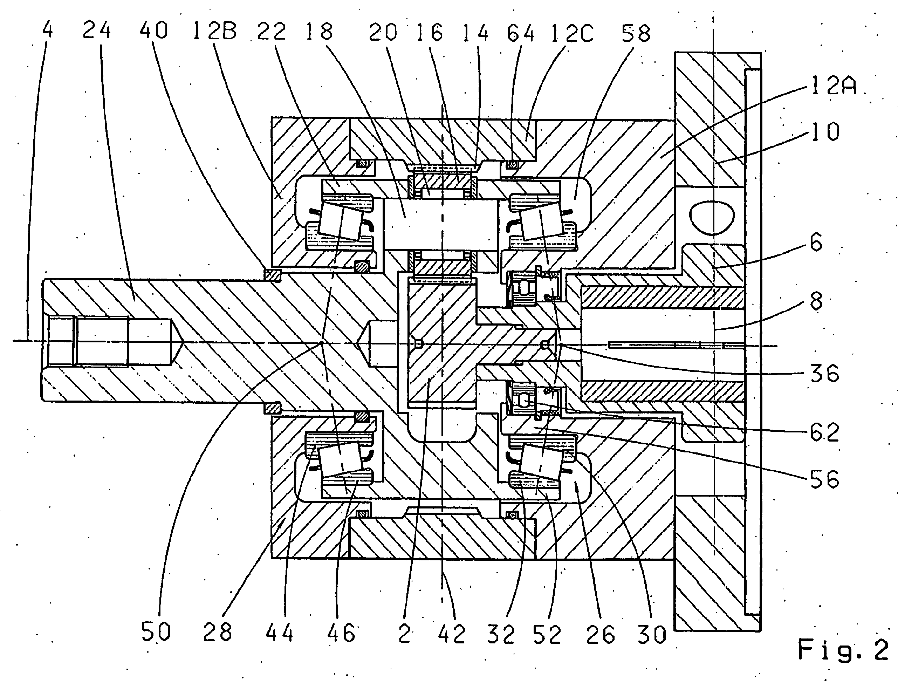

Die Fig. 2, in der gleiche Positionen mit gleichen Bezugsziffern wie in Fig. 1 versehen sind, zeigt eine Ausführungsform der Erfindung, bei der auch das zweite Schräglager (28) mit seinem Innenring (44) in dem Gehäuse (12B) festgelegt ist und mit seinem Außenring (46) mit dem Planetenträger (22) umläuft und mit seinen Drucklinien einen Druckkegel bildet, dessen Spitze (50) von dem ersten Schräglager (26) abgewandt ist. Die beiden Schräglager sind zur Erzielung einer maximalen lagerkinematisch wirksamen Lagerdistanz in O-Anordnung angeordnet, wobei die Montage und die Einstellung der Vorspannung so einfach erfolgen kann wie bei einem herkömmlichen Getriebe mit X-Anordnung der Lager. Das Gehäuse ist dreiteilig aufgebaut. Zwischen den Gehäuseteilen 12A und 12B, die die beiden Schräglager 26, 28 aufnehmen ist ein drittes Gehäuseteil 12C angeordnet, in welches das Hohlrad 14 eingearbeitet ist.

### Bezugszeichen

- 2: Sonnenrad
- 4: Getriebehauptachse
- 6: Antriebswelle
- 8: Aufnahme
- 10: Flansch
- 12A: Gehäuseteil
- 12B: Gehäuseteil
- 12C: Gehäuseteil
- 14: Hohlrad
- 16: Planetenrad
- 18: Planetenbolzen
- 20: Planetenlager
- 22: Planetenträger
- 24: Abtriebswelle
- 26: Schräglager
- 28: Schräglager
- 30: Innenring
- 32: Außenring
- 34: Drucklinie
- 36: Spitze
- 38: Radialwellendichtring
- 40: Radialwellendichtring
- 42: Planetenräderebene
- 44: Innenring
- 46: Außenring
- 50: Spitze
- 52: Verlängerung
- 54: Absatz
- 56: Vorsprung
- 58: Ausnehmung
- 60: Bohrung
- 62: Kugellager
- 64: Dichtung

## Patentansprüche

1. Planetengetriebestufe, umfassend Planetenräder (16), die mit einem Sonnenrad (2) und einer im Getriebegehäuse (12B) vorgesehenen Innenverzahnung (14) im Eingriff stehen, wobei die Planetenräder in einem, den Abtrieb bildenden, drehbaren Planetenträger (22) gelagert sind, dem abtriebsseitig ein Dichtelement (40) zugeordnet ist, wobei der Planetengetriebestufe antriebsseitig ein Wellendichtring (38) als weiteres Dichtungselement zugeordnet ist, wobei das Getriebegehäuse antriebsseitig derart geformt ist, dass eine Schnittstelle gebildet ist zum Verbinden mit weiteren Komponenten, die mindestens eine mit dem Sonnenrad verbindbares Welle umfassen, wobei der Planetenträger der Abtriebsstufe beidseitig derart gelagert ist, dass abtriebsseitig der Innenring (44) eines Wälzlagers gegen eine Schulter des Planetenträgers angestellt ist, **dadurch gekennzeichnet dass** der Außendurchmesser der Welle (6) im Bereich des Wellendichtrings reduziert ist gegenüber dem Durchmesser der Welle in einem axial weiter an triebsseitig liegenden Bereich, und antriebsseitig der Außenring (32) eines weiteren Wälzlagers gegen den Planetenträger angestellt ist.

## Claims

1. Planetary gearing stage, comprising planet gears (16) which mesh with a sun gear (2) and with an internal toothing (14) provided in the gearing housing (12B), wherein the planet gears are mounted in a rotatable planet carrier (22) which forms the drive output and which is assigned, at the drive output side, a sealing element (40), wherein the planetary gearing stage is assigned, at the drive input side, a shaft sealing ring (38) as a further seal element, wherein the gearing housing is shaped at the drive input side such that an interface is formed for connecting to further components which comprise at least one shaft that can be connected to the sun gear, wherein the planet carrier of the drive output stage is mounted at both sides such that, at the drive output side, the inner ring (44) of a rolling bearing is set against a shoulder of the planet carrier, **characterized in that** the outer diameter of the shaft (6) is reduced in the region of the shaft sealing ring in relation to the diameter of the shaft in a region situated axially further towards the drive input side, and at the drive input side the outer ring (32) of a further rolling bearing is set against the planet carrier.

## Revendications

1. Étage de transmission planétaire, comportant des pignons planétaires (16) qui sont en prise avec une roue solaire (2) et une denture intérieure (14) prévue dans le boîtier de transmission (12B), les pignons planétaires étant montés dans un porte-pignons (22) rotatif formant la sortie, auquel un élément d'étanchéité (40) est associé du côté de la sortie, une bague d'étanchéité d'arbre (38) étant associée à l'étage de transmission planétaire du côté de l'entraînement, en tant qu'élément d'étanchéité supplémentaire, le boîtier de transmission étant formé du côté de l'entraînement de telle sorte qu'une interface soit formée en vue de la liaison à d'autres composants qui comportent au moins un arbre pouvant être relié à la roue solaire, le porte-pignons de l'étage de sortie étant monté des deux côtés de telle sorte que la bague intérieure (44) d'un palier à roulement soit placée, du côté de la sortie, contre un épaulement du porte-pignons, **caractérisé en ce que** le diamètre extérieur de l'arbre (6) dans la région de la bague d'étanchéité d'arbre est réduit par rapport au diamètre de l'arbre dans une région se situant axialement plus loin du côté de l'entraînement, et du côté de l'entraînement, la bague extérieure (32) d'un palier à roulement supplémentaire est placée contre le porte-pignons.
